# EUROPÄISCHE PATENTSCHRIFT

(11) **EP 3 966 077 B1**
(45) Veröffentlichungstag und Bekanntmachung des Hinweises auf die Patenterteilung: **26.07.2023**
(21) Anmeldenummer: 20724058.1
(22) Anmeldetag: 04.05.2020
(51) Int. Cl.: B60S 3/04, B60S 3/06

(54) **VORRICHTUNG UND VERFAHREN ZUM REINIGEN VON GEGENSTÄNDEN, INSBESONDERE ZWEIRÄDERN**
DEVICE AND METHOD FOR CLEANING OBJECTS, ESPECIALLY TWO-WHEELERS
APPAREIL ET METHODE POUR NETTOYER DES OBJETS, EN PARTICULIER DES DEUX-ROUES

(30) Priorität: 10.05.2019 DE 102019112357
(43) Veröffentlichungstag der Anmeldung: 16.03.2022
(73) Patentinhaber: Kumar, Sachin, 50668 Cologne (DE)
(72) Erfinder: Kumar, Sachin, 50668 Cologne (DE)
(74) Vertreter: Freischem & Partner Patentanwälte mbB
(86) Internationale Anmeldenummer: PCT/EP2020/062257
(87) Internationale Veröffentlichungsnummer: WO 2020/229208

(56) Entgegenhaltungen:
- EP-B1- 2 729 331
- WO-A1-2017/072167
- DE-C1- 4 325 973

## Beschreibung

Die Erfindung betrifft eine Vorrichtung und ein Verfahren zur Reinigung von Gegenständen, insbesondere Zweirädern.

Vorrichtungen und Verfahren zum Reinigen von Gegenständen können zum Erzielen einer mechanischen Reinigungswirkung um eine Rotationsachse rotierbare Bürsten aufweisen. Die Bürsten weisen Borsten auf. Zum Erzielen der Reinigungswirkung befindet sich der zu reinigende Gegenstand in dem Bewegungsbereich der Borsten. Dort, wo die Borsten die zu reinigenden Bereiche des Gegenstands erreichen können, kann mittels rotierender Bürsten oftmals eine gründliche Reinigung erzielt werden. Problematisch stellt sich die Situation dar, wenn zu reinigende Bereiche des Gegenstands durch die Borsten nicht erreicht werden.

Dies gilt insbesondere für zu reinigende Gegenstände in Gestalt von Zweirädern. Während für PKWs weitgehend ausgereifte automatisierte Waschanlagen zur Verfügung stehen, erfolgt die Reinigung von Zweirädern derzeit in der Praxis zumeist manuell. Dies ist zeitraubend und umständlich.

Die zur Reinigung von PKWs bekannten Waschanlagen hinsichtlich ihrer Abmessungen auf die Reinigung von Zweirädern anzupassen, stellt keine praktikable Lösung dar. Für eine derartige Anlage wird ein geeignetes bauliches Umfeld benötigt, in dem eine solche Anlage betrieben werden kann. Am Aufstellungsort der Anlage muss eine geeignete Nasszelle bereitgestellt werden. Die hierfür erforderlichen baulichen Maßnahmen sind zum einen teuer, zum anderen erfordern sie einen erheblichen Raumbedarf. Dies ist gerade an den Orten, wo sich Vorrichtungen der in Rede stehenden Art wirtschaftlich sinnvoll betreiben lassen würden, ungünstig. Es ist davon auszugehen, dass der Betrieb einer Vorrichtung der in Rede stehenden Art insbesondere in Ballungszentren mit hoher Bevölkerungsdichte, wo es aufgrund der Verkehrssituation zu einem hohen Anteil von Zweirädern am Straßenverkehr kommt, sinnvoll. Gerade in solchen Gebieten stellt die Bereitstellung eines geeigneten umbauten Raumes eine erhebliche Hürde für die Realisierung des Betriebs einer entsprechenden Vorrichtung dar.

Eine solche Vorrichtung ist unter anderem aus der WO 2017/072167 A1 bekannt. Die dort gezeigte Vorrichtung weist ein halboffenes Gehäuse auf, in dem zwei um eine vertikale Achse rotierende Bürsten angeordnet sind. Das zu reinigende Zweirad kann manuell an diesen Bürsten vorbei bewegt werden.

Die Vorrichtung ist zwar relativ kompakt und kostengünstig, jedoch ist der Vorgang der Reinigung des Zweirads gegenüber einer rein manuellen Reinigung erheblich vereinfacht, dennoch erfordert die Vorrichtung die manuelle Handhabung des Zweirades während der Reinigung. Darüber hinaus bietet das halb offene Gehäuse nur einen begrenzten Spritzwasserschutz während dem Reinigungsvorgang, wodurch die Aufstellung einer derartigen Vorrichtung, zum Beispiel in geschlossenen Räumen, nicht immer unproblematisch ist.

Aus der EP 2 729 331 B1 ist eine ebenfalls vergleichsweise kompakte Vorrichtung zum Reinigen von Zweirädern bekannt. Die Zweiräder werden bei dieser Vorrichtung in einem Spritzschutzgehäuse aufgenommen. Während des Reinigungsvorgangs werden rotierende Bürsten an dem Fahrrad entlang bewegt. Die vergleichsweise kompakte Anordnung der Bürsten in dem Spritzschutzgehäuse wird dadurch ermöglicht, dass die Bürsten an einem Schlitten angeordnet sind, der mittels einer Führungseinrichtung bewegt wird. Die Führungseinrichtung ist unterhalb des Bodens des Spritzschutzgehäuses, welcher das zur Reinigung erforderliche Wasser auffängt, angeordnet. Der Schlitten mit den Führungen ist so zwar vor Spritzwasser geschützt, um den Schlitten unterhalb der Bodenwanne des Gehäuses anordnen zu können, ergibt sich eine vergleichsweise große Höhe der Vorrichtung. Zum Einführen des Zweirades in das Spritzschutzgehäuse muss dieses jedoch an Lenker und Sattel gegriffen und in das Gehäuse geschoben werden. Für kleinwüchsige Personen gestaltet sich dieser Vorgang aufgrund der Bauhöhe des Gehäuses unkomfortabel. Um den Schlitten überhaupt mit den rotierenden Reinigungsbürsten verbinden zu können, sind diese an "Armen" befestigt, welche die Bodenwanne des Gehäuses umgreifen. Die Arme müssen zwischen Boden und Seitenwänden des Gehäuses hindurchgeführt werden, um die rotierenden Bürsten mit dem Schlitten zu verbinden. Diese Konstruktion ist ebenso aufwändig wie anfällig.

Den vorstehend beschriebenen Vorrichtungen gemein ist, dass die bezogen auf die Rotationsachse axialen Endbereiche der rotierenden Bürste einen problematischen Bereich darstellen, wenn es darum geht, alle zu reinigenden Bereiche des Gegenstands, insbesondere der Zweiräder, zu erreichen. Dieses Problem betrifft insbesondere die Bereiche an den axialen Enden der Bürste. Typischerweise müssen die rotierenden Bürsten im Bereich ihrer axialen Enden mit geeigneten Halterungen oder ähnlichem, gegenüber denen die rotierbaren Bürsten rotierbar gelagert sind, verbunden werden. Da dies einen gewissen Bauraum beansprucht, können sich im Bereich der Enden einer Bürste Bereiche ausbilden, die von dem Bewegungsbereich der Borsten nicht oder nicht hinreichend abgedeckt werden. Mit anderen Worten, die Borsten können diese Bereiche nicht erreichen. Dies kann zu einer nicht hinreichenden Reinigung der in Rede stehenden Gegenstände führen, wenn sich Bereiche dieser Gegenstände in eben jenen, von den Borsten nicht erreichten Bereichen, befinden.

Die DE 43 23 973 zeigt ebenfalls eine gattungsgemäße Vorrichtung zum Reinigen eines Zweirades, wobei in einer Kabine zwei beidseits des Zweirades positionierte rotierbare bürstenartige Reinigungswalzen vorhanden sind.

Der Erfindung liegt daher die Aufgabe zugrunde, eine Vorrichtung zur Reinigung von Gegenständen, insbesondere von Zweirädern, zur Verfügung zu stellen, deren rotierende Bürste wenigstens im Bereich eines ihrer axialen Enden einen größeren Raumbereich entlang der Achse zur Erzielung der Reinigungswirkung erreichen kann, als die aus dem Stand der Technik bekannten Vorrichtungen.

Die Aufgabe wird gelöst durch eine Vorrichtung mit den Merkmalen der unabhängigen Ansprüche. Die Merkmale der abhängigen Ansprüche betreffen vorteilhafte Ausführungsformen.

Die erfindungsgemäße Vorrichtung weist ein Abweiserelement zum Abweisen der Borsten auf. Das Abweiserelement ist zumindest teilweise in dem Bewegungsbereich der Borsten bei rotierender Bürste angeordnet. Dadurch beeinflusst das Abweiserelement die Bewegung der Borsten. Die Vorrichtung ist nun derart gestaltet und betreibbar, dass durch den Einfluss des Abweiserelements auf die Bewegung der Borsten der Bewegungsbereich der Borsten auf der von dem Abweiserelement abgewandten Seite der Bürsten in Richtung eines auf die Rotationsachse der Bürste bezogen axialen Endes der Bürste aufgeweitet wird.

Es hat sich gezeigt, dass es möglich ist, durch ein derart angeordnetes Abweiserelement die Bewegungen der Bürste auf dem von dem Abweiserelement abgewandten Seit derart zu beeinflussen, dass sich eine Aufweitung des Bewegungsbereichs der Borsten zu einem axialen Ende der Bürste hin ergibt. Durch eine geeignete Gestaltung des Abweiserelements und die Wahl geeigneter Betriebsparameter, wie insbesondere die Wahl einer geeigneten Drehzahl sowie geeignete und geeignet bemessene Borsten, lassen sich so mit dem Bewegungsbereich der Borsten Bereiche erreichen, die nach dem Stand der Technik nicht erreichbar waren. Ein wesentlicher Vorteil der Erfindung ist, dass das Abweiserelement die Bewegung der Borsten auf der von dem Abweiserelement abgewandten Seite der rotierenden Bürste beeinflusst. Um mit einer derartigen Vorrichtung ein Reinigungsverfahren durchzuführen, befindet sich der zu reinigende Gegenstand in dem Bewegungsbereich der Borsten. Das Abweiserelement zum Abweisen der Borsten befindet sich zumindest teilweise in dem Bewegungsbereich der Borsten auf der von dem Gegenstand abgewandten Seite der Bürste. Da sich der Gegenstand und das Abweiserelement auf voneinander abgewandten Seiten der rotierenden Bürste befinden, kommt es zu keiner gegenseitigen Behinderung zwischen Abweiserelement und Gegenstand.

Besonders signifikant macht sich der Einfluss des Abweiserelements bei einer rotierenden Bürste bemerkbar, deren Rotationsachse, zumindest im Wesentlichen, senkrecht orientiert ist. Bei derartigen Bürsten kann durch das Abweiserelement der Bewegungsbereich der Borsten auf der von dem Abweiserelement abgewandten Seite der Bürste insbesondere in Richtung des oberen axialen Endes der Bürste aufgeweitet werden. Dies ist insbesondere deswegen vorteilhaft, da bei derartig orientierten Bürsten die Borsten aufgrund des kombinierten Einflusses ihrer Fliehkraft und der Schwerkraft nach dem Stand der Technik oftmals eine nach unten weisende Ausrichtung einnehmen. Es hat sich gezeigt, dass mittels eines Abweiserelements diese Borsten dazu gebracht werden können, auf ihrer vom Abweiserelement abgewandten Seite eine schräg nach oben weisende Ausrichtung einzunehmen. Dies ist beispielsweise dann besonders vorteilhaft, wenn es sich um eine Vorrichtung zur Reinigung von Zweirädern handelt. Bei derartigen Vorrichtungen kann so durch den Bewegungsbereich der Bürste ein Bereich direkt unterhalb eines Spritzschutzgehäuses bzw. einer Spritzschutzabdeckung erreicht werden, der sonst nicht durch die Borsten der Bürste erreichbar wäre.

Das Abweiserelement kann eine Oberflächenstruktur aufweisen, mit der die Bewegung der Borsten beeinflusst wird. Die Oberflächenstruktur kann insbesondere derart ausgeprägt sein, dass die Borsten der Bürste beim Entlangstreifen an der Oberflächenstruktur einen Bewegungsimpuls in Richtung des entsprechenden axialen Endes der Bürste erhalten. So kann die Oberflächenstruktur beispielsweise eine diagonal zu der Umfangsrichtung der rotierenden Bürste verlaufende Rippenstruktur aufweisen. Die Oberfläche mit der Oberflächenstruktur kann eine Krümmung aufweisen, so dass sich in Verbindung mit den diagonal verlaufenden Rippen eine Struktur nach Art eines Segments einer Helix ergibt. Ein so gestaltetes Abweiserelement kann insbesondere auch genutzt werden, um die rotierenden Borsten mit Bewegungsimpulsen in Richtung beider Enden der rotierenden Bürste zu beeinflussen, so dass sich auf der von dem Abweiserelement abgewandten Seite der Bewegungsbereich der Borsten in Richtung beider axialer Enden der Bürste aufweitet.

So kann es sich bei dem Abweiserelement beispielsweise um ein Blech handeln. Alternativ und/oder ergänzend ist es möglich, das Abweiserelement aus Kunststoff zu gestalten. Ebenfalls ist eine Kombination verschiedener Werkstoffe möglich. Besonders vorteilhaft ist es, wenn das Abweiserelement zumindest teilweise aus HDPE (high density polyethylene) besteht. Das Abweiserelement kann auch ein Bestandteil eines anderen Elements der Vorrichtung sein. Insbesondere kann das Abweiserelement ein Bestandteil eines Gehäuses, insbesondere eines Spritzschutzgehäuses der Vorrichtung sein.

Es ist möglich, dass das Abweiserelement relativ zu der rotierenden Bürste bewegbar ist. So kann das Abweiserelement insbesondere in oszillierenden Bewegungen bewegt werden. Die Bewegungsrichtung kann insbesondere parallel zur Rotationsachse sein. Hierdurch lassen sich die Einflüsse des Abweiserelements auf die Borsten zeitabhängig verändern. So kann es beispielsweise möglich sein, dass die Borsten der rotierenden Bürste abwechseln jeweils in Richtung einer der beiden Enden der Bürste ausgelenkt werden.

Die Bewegbarkeit des Abweiserelements kann insbesondere dadurch erzielt werden, dass ein elektroaktives Polymer verwendet wird. Dieses verändert seine Form durch das Anlegen einer elektrischen Spannung. Es kann das gesamte Abweiserelement bewegt werden, alternativ und/oder ergänzend ist es ebenfalls möglich, dass lediglich eine Oberflächenstruktur, insbesondere durch Verwendung eines elektroaktiven Polymers, verändert (und somit bewegt) wird. So kann beispielsweise die Orientierung einer diagonal zur Umfangsrichtung der rotierenden Bürste verlaufenden Rippenstruktur durch das Bewegen des Abweiserelements bzw. Verändern von dessen Oberflächenstruktur verändert werden.

Die rotierende Bürste kann durch eine Lageranordnung gelagert sein, die zwei Radiallager und ein Axiallager aufweist. Die Radiallager sind insbesondere im Bereich beider Enden der Bürste angeordnet.

Vorteilhafterweise kann die Vorrichtung zwei Bürsten aufweisen, die derart angeordnet sind, dass der zu reinigende Gegenstand in einem Aufnahmeraum zwischen den Bürsten angeordnet werden kann. Eine derartige Anordnung ermöglicht es, den Gegenstand von zwei gegenüberliegenden Seiten mit rotierenden Bürsten zu reinigen. Dadurch wird eine bessere Reinigungswirkung erzielt.

Die beiden Bürsten können durch einen gemeinsamen Antrieb angetrieben werden. Das Antreiben beider rotierbarer Bürsten durch einen gemeinsamen Antrieb ermöglicht eine Kostensenkung durch den Wegfall des zweiten Antriebs. Insbesondere dann, wenn der zu reinigende Gegenstand in einem Aufnahmeraum zwischen den rotierenden Bürsten angeordnet werden soll, kann es sinnvoll sein, wenn ein Übertragungsmittel zur Übertragung der Antriebsbewegung unter dem Aufnahmeraum für den zu reinigenden Gegenstand hindurchgeführt ist. Der Aufnahmeraum bleibt dann aus anderen Richtungen zugänglich, was insbesondere zum Einbringen und/oder Entnehmen des Gegenstands hilfreich ist. Unter dem Aufnahmeraum hindurchgeführt kann das Übertragungsmittel insbesondere in einer Bodenwanne der Vorrichtung angeordnet sein. Bei dem Übertragungsmittel handelt es sich insbesondere um ein Zugmittel, weiter insbesondere um einen Riemen.

Die Vorrichtung kann ein Spritzschutzgehäuse aufweisen. Das Spritzschutzgehäuse dient dazu, die Umgebung, in der die Vorrichtung aufgestellt wird, vor Reinigungsflüssigkeit zu schützen.

Die Vorrichtung bzw. das Verfahren können die Nutzung einer Reinigungsflüssigkeit vorsehen. Bei dem Hauptbestandteil der Reinigungsflüssigkeit kann es sich um Wasser handeln. Die Reinigungsflüssigkeit kann darüber hinaus weitere Zusatzstoffe, insbesondere solche, die die Reinigung des Zweirades unterstützen, beinhalten. Bei den Zusatzstoffen kann es sich insbesondere um Tenside handeln.

Unter Zweirädern im Sinne der vorliegenden Erfindung sind insbesondere Fahrräder zu verstehen. Hierunter fallen auch Fahrräder, die einen elektrischen Antrieb aufweisen, insbesondere sogenannte ebikes oder Pedelecs. Darüber hinaus können jedoch auch grundsätzlich andere Arten von Zweirädern, wie beispielsweise Mofas, Mopeds, Motorräder und dergleichen mit den in Rede stehenden Vorrichtungen gereinigt werden.

Die Vorrichtung kann dazu ausgebildet sein, das zu reinigende Zweirad, zumindest teilweise, so aufzunehmen, dass wenigstens eines der Räder des zu reinigenden Zweirades in die in der Bodenwanne enthaltene Reinigungsflüssigkeit eintaucht. Durch das Eintauchen des Rades in die Reinigungsflüssigkeit wird insbesondere eine gründliche Reinigung des Reifens erzielt. Die Vorrichtung kann ein Überlauf aufweisen. Ein derartiger Überlauf kann sicherstellen, dass sich die Oberfläche des in der Bodenwanne aufgenommenen Vorrats an Reinigungsflüssigkeit immer in der richtigen Höhe befindet. Die Vorrichtung kann einen Ausgleichstank aufweisen, der die durch den Überlauf ablaufende überschüssige Reinigungsflüssigkeit aufnimmt, bevor diese wieder auf das Zweirad gesprüht wird.

Unter einer zumindest teilweisen Aufnahme des Gegenstands, insbesondere des Zweirades in der Vorrichtung ist in diesem Zusammenhang insbesondere zu verstehen, dass einzelne Teile des Gegenstands, insbesondere des Zweirades, insbesondere der Lenker und/oder der Sattel, außerhalb des Spritzschutzgehäuses angeordnet sein können, während der Gegenstand, insbesondere das Zweirad gereinigt wird. Dies ermöglicht in vorteilhafter Weise eine besonders kompakte Gestaltung des Spritzschutzgehäuses. Insbesondere durch das Herausragen von Lenker und/oder Sattel aus dem Spritzschutzgehäuse wird es ermöglicht, die Höhe des Spritzschutzgehäuses zu begrenzen. Durch die Begrenzung der Höhe des Spritzschutzgehäuses wird wiederum die Bedienung erheblich vereinfacht, da so beim Einbringen des Zweirades in das Spritzschutzgehäuse bzw. beim Entnehmen des Zweirades aus dem Spritzschutzgehäuse das Zweirad bequemer an Lenker und/oder Sattel gegriffen werden kann. Insbesondere für kleinwüchsige Personen ist in diesem Zusammenhang ein niedriges Spritzschutzgehäuse vorteilhaft, wenn die Person über das Gehäuse hinweggreifen muss, um Sattel und/oder Lenker des Zweirades zu erreichen.

Die Gestaltung der Vorrichtung, die dazu führt, dass bei der Reinigung des Zweirades wenigstens eines der Räder in die Reinigungsflüssigkeit eintaucht hat den Vorteil, dass eine besonders gründliche Reinigung der Reifen ermöglicht wird. Diese kommen bei der Benutzung des Zweirades am stärksten mit Schmutz in Kontakt und bedürfen daher einer besonders intensiven Reinigung.

In diesem Zusammenhang kann es insbesondere vorteilhaft sein, wenn die Vorrichtung einen Ultraschallgenerator zur Erzeugung von Ultraschall aufweist. Dieser ist bevorzugt so angeordnet, dass er zumindest teilweise, vorzugsweise vollständig, in die Reinigungsflüssigkeit eintaucht. Angeordnet ist der Ultraschallgenerator insbesondere in dem Bereich, der in der Bodenwanne aufgenommenen Reinigungsflüssigkeit, in den auch ein Rad des Zweirades eintaucht. Der Ultraschallgenerator befindet sich dabei insbesondere wenigstens zwei Zentimeter und/oder höchstens zehn Zentimeter von dem zu reinigenden Rad des Zweirades entfernt. Besonders vorteilhaft ist es, wenn der Ultraschallgenerator wenigstens vier und höchstens sieben, insbesondere etwa fünf Zentimeter von dem zu reinigenden Rad, insbesondere von dem zu reinigenden Reifen, angeordnet ist.

Die Rotationsachse der rotierenden Bürste kann vertikal orientiert sein. Das obere Ende der rotierenden Bürste kann in einer Höhe von wenigstens 60 Zentimeter, insbesondere wenigstens 80 Zentimeter oberhalb des untersten Punktes des Gegenstands, insbesondere des Zweirades angeordnet sein.

Bei der rotierenden Bürste kann es sich um eine Hybridbürste handeln. Die Bürste kann einen Grundkörper aufweisen, in der der Antrieb für die rotierende Bewegung der Bürste angeordnet ist. Eine derartige Anordnung des Antriebs in dem Grundkörper der Bürste führt insbesondere dazu, dass keine zusätzliche Höhe für den Antrieb benötigt wird.

Weist die Vorrichtung zwei rotierende Bürsten auf, zwischen denen der zu reinigende Gegenstand angeordnet werden kann, so beträgt der Abstand zwischen den Grundkörpern der rotierenden Bürste insbesondere wenigstens 470 mm und/oder höchstens 620 mm.

Die rotierende Bürste kann einen abnehmbaren Borstenbesatz aufweisen. Ein derartiger Besatz ist in einfacher Weise austauschbar, wenn die Borsten abgenutzt sind.

Die Bürste kann langgestreckte Schaumstoffelemente und/oder Vlieselemente, insbesondere aus Mikrofasern, als Borsten aufweisen. Diese können beispielsweise aus Polyurethan sein. Alternativ und/oder ergänzend kann die Bürste Borsten aufweisen, die einen profilierten, insbesondere x-förmigen, Querschnitt aufweisen. Dies verbessert den Transport der Reinigungsflüssigkeit zu den Spitzen der Borsten. Im Bereich ihrer Spitzen können die Borsten gespleißt sein. Unter einer Hybridbürste ist in diesem Zusammenhang insbesondere eine Bürste welche sowohl Schaumstoffelemente als auch Borsten aufweist, zu verstehen.

Die Länge der Borsten kann so bemessen sein, dass sich bei rotierender Bürste ein Radius der rotierenden Bürste von wenigstens 20 Zentimeter, insbesondere wenigstens 30 Zentimeter und/oder höchstens 40 Zentimeter, insbesondere 50 Zentimeter ergibt.

Die rotierende Bürste kann derart in der Vorrichtung befestigt sein, dass die Rotationsachse eine von dem Gegenstand, insbesondere dem Zweirad, weg gerichtete Pendelbewegung ausführen kann. Dies kann insbesondere dadurch erreicht werden, dass die rotierende Bürste, insbesondere ausschließlich, mit dem oberen Ende ihrer Drehachse mit der Vorrichtung, insbesondere mit dem Rahmen, verbunden ist. Die Pendelbewegung ermöglicht es, dass die rotierende Bürste möglichen Hindernissen, beispielsweise Pedalen eines Fahrrades, durch eine von dem Gegenstand, insbesondere dem Zweirad, weg gerichtete Pendelbewegung ausweicht. Die Verbindung zwischen der rotierenden Bürste und der Vorrichtung, insbesondere dem Rahmen, kann dabei insbesondere durch ein gelenkiges Verbindungselement erfolgen, welches die Pendelbewegung ermöglicht.

Die Vorrichtung kann eine Raddreheinheit aufweisen. Die Raddreheinheit dient dazu, ein Rad des Zweirades in Rotation zu versetzen. Dies ermöglicht es insbesondere, den äußeren Bereich des Rades, insbesondere die Reifen, auf ihrem vollen Umfang in die Reinigungsflüssigkeit eintauchen zu lassen. Insbesondere wird so der gesamte Umfang des äußeren Bereichs des Rades einer Ultraschallreinigung zugänglich gemacht. Darüber hinaus kann die Vorrichtung Bürsten aufweisen, die im Bereich eines Reifens eines in der Vorrichtung aufgenommenen Zweirades angeordnet sind. Durch die Raddreheinheit wird das Rad mit dem Reifen an diesen Bürsten vorbei bewegt und so gereinigt.

Die Raddreheinheit kann eine Mehrzahl Rotationskörper aufweisen, die die Rotationsbewegung eines Antriebs auf das Rad übertragen. Der Antrieb kann innerhalb eines Rotationskörpers angeordnet sein. Die Rotationskörper können über Zugmittel miteinander verbunden sein, so dass die Rotationsbewegung von einem Rotationskörper auf den anderen übertragen wird. Die Rotationskörper können von zumindest im Wesentlichen kreiszylindrischer Gestalt sein. Es können Führungselemente zur seitlichen Führung des Rades an den Rotationskörpern angeordnet sein. Diese sind bevorzugt zueinander beabstandet und können insbesondere aufeinander zuweisende, insbesondere sich verjüngende Führungsflächen aufweisen. Die Führungsflächen können konisch gestaltet sein.

Die Rotationskörper können, insbesondere im Bereich zwischen den Führungselementen, eine Oberflächenstruktur aufweisen. Es hat sich gezeigt, dass eine Strukturierung der Oberfläche ein besonders effizienter Weg ist, ein Gleiten der Räder auf den Rotationskörpern zu verhindern. Ein solches Gleiten hätte schlimmstenfalls zur Folge, dass das Rad nicht gedreht wird. Der mit der Strukturierung der Oberfläche versehene Bereich kann eine Breite von wenigstens 30 mm, insbesondere wenigstens 50 mm, aufweisen.

Die Rotationskörper sind bevorzugt in Längsrichtung des Zweirades hintereinander angeordnet. Eine Raddreheinheit kann wenigstens drei, insbesondere wenigstens vier, hintereinander angeordnete Rotationskörper aufweisen. Es können sämtliche Rotationskörper eine Raddreheinheit über Zugmittel miteinander verbunden sein. Auf diese Weise wird lediglich ein Antrieb für eine Raddreheinheit benötigt.

Die Raddreheinheit und/oder eine andere, insbesondere nach Art einer Führungsschiene, gestaltete Aufnahme für einen zu reinigenden Gegenstand kann höhenverstellbar ausgebildet sein.

Die Vorrichtung kann zur Abscheidung von Schmutzpartikeln aus der Reinigungsflüssigkeit einen Filter und/oder einen Hydrozyklon aufweisen. Insbesondere durch einen Hydrozyklon ist eine vorteilhafte Abscheidung von Schmutzpartikeln aus der Reinigungsflüssigkeit möglich, da ein Hydrozyklon bei einer geringen Druckdifferenz betrieben werden kann und sich im Gegensatz zu einem Filtermaterial nicht mit Schmutzpartikeln zusetzt. Die Vorrichtung, insbesondere der Hydrozyklon, ist bevorzugt derart gestaltet, dass sich eine Trennungskorngröße des Hydrozyklon von wenigstens 1 µm, insbesondere wenigstens 3 µm, und/oder höchstens 10 µm, insbesondere höchstens 7 µm, ergibt.

Die Vorrichtung kann zum Reinigen von zum Reinigen der Gegenstände verwendeter Reinigungsflüssigkeit eine Hydrozyklonanordnung mit einer Mehrzahl Hydrozyklone aufweisen. Die Hydrozyklonanordnung weist insbesondere zwei in Reihe geschaltete Hydrozyklone auf. Die zwei Hydrozyklone sind insbesondere derart verschaltet, dass ein erster Hydrozyklon der Abtrennung grober Partikel dient. Insbesondere dient der erste Hydrozyklon der Abtrennung grober Partikel, die größer sind als 70 µm. Der Hydrozyklon kann durch einen Tank verschlossen sein, in dem sich die abgetrennten groben Partikel sammeln. Der Tank kann ein Ventil aufweisen, welches elektrisch und/oder mechanisch geöffnet werden kann, um die sich im Tank ansammelnden Partikel abzuführen. Die Entleerung über das Ventil erfolgt bevorzugt bei abgeschalteter Pumpe. Der Hydrozyklon ist bevorzugt auf der Saugseite einer Pumpe vorgeschaltet. Der zweite, mit dem ersten Hydrozyklon insbesondere in Reihe geschaltete Hydrozyklon ist bevorzugt mit der Druckseite der Pumpe verbunden. Auf diese Weise verhindert der erste Hydrozyklon, dass besonders große Partikel in die Pumpe eindringen, die durch diese Partikel beschädigt werden könnte. Der zweite Hydrozyklon ist bevorzugt an seinem unteren Ende offen. In der beschriebenen Anordnung reicht eine kleine Öffnung, die einen geringen Flüssigkeitsdurchtritt, beispielsweise ca. 100 ml/Minute erlaubt. Mit dieser Flüssigkeit kann eine weitere Fraktion Partikel aus der Reinigungsflüssigkeit abgeschieden werden. Hierbei handelt es sich insbesondere um Partikel mit einer Größe von wenigstens 1 µm, insbesondere wenigstens 3 µm, und/oder höchstens 10 µm, insbesondere höchstens 7 µm. Im Idealfall kann auf diese Weise ein kontinuierlicher Betrieb ermöglicht werden.

Die Vorrichtung kann eine Strömungserzeugungseinrichtung zur Erzeugung einer Strömung in der Bodenwanne aufweisen. Die Erzeugung einer Strömung in dem in der Bodenwanne aufgenommenen Vorrat an Reinigungsflüssigkeit hat den Vorteil, dass durch die Strömung eine Sedimentation von Schmutzpartikeln zumindest erschwert, insbesondere verhindert wird. Hierdurch wird verhindert, dass sich ein "Bodensatz" aus Schmutz bei längerem Betrieb der Vorrichtung in der Bodenwanne ansammelt. Zum einen können so Stillstandszeiten aufgrund notweniger Reinigung der Bodenwanne zumindest verringert, insbesondere vermieden werden. Weiterhin wird verhindert, dass es aufgrund sich ansammelnder Verschmutzungen zu Betriebsstörungen kommt.

Die Vorrichtung kann weiterhin eine Umkehrosmose-Einrichtung aufweisen. Diese kann genutzt werden, um einen Spülgang mit destilliertem Wasser zu ermöglichen. Ein derartiger Spülgang ist insbesondere am Ende eines Waschgangs sinnvoll. Bei einem derartigen Spülgang wird eine gewisse Menge Wasser, beispielsweise etwa 20 Liter, in einer bestimmten Zeit, beispielsweise in etwa zwei Minuten, genutzt um den Gegenstand, insbesondere das Zweirad, zu spülen. Bevorzugt ist eine Steuerungseinrichtung der Vorrichtung so eingerichtet, dass der Spülgang ohne den Einsatz der rotierenden Bürste, insbesondere ohne den Einsatz jeglicher Bürsten, durchgeführt wird. Dies bedeutet insbesondere, dass das destillierte Wasser lediglich über den Gegenstand, insbesondere das Zweirad gesprüht wird.

Bei dem in der Bodenwanne vorgehaltenen Reinigungsflüssigkeitsvorrat kann es sich um eine Reinigungsflüssigkeit handeln, die als wesentlichen Bestandteil entkalktes Wasser enthält. Hierdurch wird die Membran der Umkehrosmose-Einrichtung entlastet. Zur Erzeugung des entkalkten Wassers kann die Vorrichtung eine Entkalkungseinrichtung aufweisen. Die Vorrichtung ist bevorzugt derart gestaltet, dass Frischwasser, welches der Vorrichtung zugeführt wird, zunächst der Entkalkungseinheit zugeführt, dort entkalkt, und dann erst weiteren Bestandteilen der Vorrichtung, insbesondere der Umkehrosmose-Einrichtung, zugeführt wird. Die Steuerungseinrichtung der Umkehrosmose-Einrichtung kann dafür eingerichtet sein, dass die Umkehrosmose während eines überwiegenden Teils des Waschgangs ausgeführt wird, insbesondere während des gesamten Waschgangs ausgeführt wird. Dies ermöglicht es insbesondere, einen Vorrat des mit der Umkehrosmose-Einrichtung erzeugten destillierten Wassers zu erzeugen, der dann im Spülgang eingesetzt wird. Die Vorrichtung weist hierfür bevorzugt einen Tank für das mit der Umkehrosmose-Einrichtung erzeugte Spülwasser auf. Eine derartige Betriebsweise der Vorrichtung ermöglicht es, die Umkehrosmose-Einrichtung kleiner zu dimensionieren als dies nötig wäre, wenn diese lediglich zum Zeitpunkt des Spülvorgangs genutzt würde.

Die Reinigungsflüssigkeit kann ein Flockungsmittel als Inhaltsstoff aufweisen. Derartige Flockungsmittel erleichtern insbesondere die Abtrennung feiner Partikel und dienen zur Enttrübung der Reinigungsflüssigkeit. Bei dem Flockungsmittel kann es sich insbesondere um ein biologisches Flockungsmittel handeln. Es kann sich um ein Flockungsmittel handeln, welches auf fermentiertem Mais als wirksamem Bestandteil basiert.

Die Vorrichtung kann einen maximalen Druck der auf den Gegenstand, insbesondere das Zweirad, versprühten Reinigungsflüssigkeit aufweisen. Hierunter ist insbesondere der Druck der Reinigungsflüssigkeit unmittelbar vor dem Verlassen des Leitungssystems der Vorrichtung durch etwaige Düsen zum Verteilen der Reinigungsflüssigkeit über das Zweirad zu verstehen. Dieser Druck kann höchstens zehn bar, und/oder wenigstens drei bar betragen. Es hat sich gezeigt, dass eine Reinigung der Zweiräder mit einem niedrigeren Druck, als dieser für gewöhnlich für eine gründliche Reinigung eines Gegenstands, insbesondere eines Zweirades, als notwendig angesehen wird, zu einer Schonung potentiell empfindlicher Komponenten Gegenstands, insbesondere des Zweirades, führt. Insbesondere bei der Reinigung sogenannter ebikes bzw. Pedelecs können durch die Beschränkung des Maximaldrucks mögliche Beschädigungen, zumindest weitestgehend, vermieden werden.

Es hat sich gezeigt, dass der Durchsatz der Reinigungsflüssigkeit, der während des Waschgangs auf den Gegenstand, insbesondere das Zweirad, aufgebracht, insbesondere mittels Düsen aufgesprüht, wird wenigstens 20, insbesondere wenigstens 45, und/oder höchstens 130, insbesondere höchstens 110 Liter/Minute betragen kann. Insbesondere kann der Durchsatz 60 bis 100 Liter/Minute betragen. Es hat sich gezeigt, dass sich bei diesen Durchsätzen eine zufriedenstellende Reinigungswirkung, insbesondere auch bei niedrigen Drücken, erreicht werden kann.

Die Vorrichtung kann ein Durchlauferhitzer zum Erhitzen der Reinigungsflüssigkeit aufweisen. Der Durchlauferhitzer kann derart angeordnet sein, dass er die Reinigungsflüssigkeit erhitzt, unmittelbar bevor diese auf den Gegenstand, insbesondere auf das Zweirad, gesprüht wird. Hierunter ist insbesondere zu verstehen, dass lediglich der Teil der Reinigungsflüssigkeit in der Vorrichtung, der während einem Waschgang auf den Gegenstand, insbesondere auf das Zweirad, gesprüht wird, erhitzt wird. Auf diese Weise wird ein energiesparender Betrieb gewährleistet, da nicht zunächst der gesamte Reinigungsflüssigkeitsvorrat erhitzt werden muss, sondern nur der Teil, der tatsächlich auf den Gegenstand, insbesondere das Zweirad, gesprüht wird.

Die Vorrichtung kann eine Keimabtöteinrichtung zum Abtöten von Keimen aufweisen. Die Keimabtöteinrichtung kann insbesondere dazu ausgebildet sein, Keime mittels UV-Licht abzutöten.

Die Vorrichtung, insbesondere die Steuerungseinrichtung der Vorrichtung, kann ein Bezahlsystem aufweisen. Das Bezahlsystem kann für Bezahlungen mit Bargeld und/oder einem bargeldlosen Zahlungsmittel ausgebildet sein.

Die Vorrichtung, insbesondere die Steuerungseinrichtung der Vorrichtung, kann dazu eingerichtet sein, die Rotationsrichtung die Bürste abwechselnd in unterschiedliche Richtungen rotieren zu lassen. Hierdurch wird eine bessere Reinigung des Gegenstands ermöglicht, da die

Die Vorrichtung weist insbesondere eine rotierende Reinigungsdüse zum Verteilen der Reinigungsflüssigkeit über den Gegenstand, insbesondere das Zweirad, auf. Die rotierende Reinigungsdüse kann insbesondere derart gestaltet sein, dass sei ein rotierendes Element aufweist, welches um eine Rotationsachse rotiert und an dem wenigstens eine, bevorzugt wenigstens zwei, Austrittsöffnungen für die Reinigungsflüssigkeit voneinander und/oder von der Rotationsachse beabstandet angeordnet sind. Die rotierende Reinigungsdüse ist insbesondere so gestaltet, dass die Rotationsbewegung des rotierenden Elements der rotierenden Reinigungsdüse durch das austretende Wasser bewirkt wird. Hierdurch kann es im Idealfall möglich sein, die Rotationsbewegung der rotierenden Reinigungsdüse ohne weitere Hilfsenergie zu ermöglichen, was den Aufbau der Vorrichtung vereinfacht und insbesondere die Menge der stromführenden Leitungen in dem der Reinigungsflüssigkeit ausgesetzten Bereich der Vorrichtung reduziert. Gleichzeitig ermöglicht die Rotationsbewegung der rotierenden Reinigungsdüse eine wesentlich bessere Verteilung der auf das Zweirad gesprühten Reinigungsflüssigkeit.

Die Außenhaut des Spritzschutzgehäuses kann, zumindest im Wesentlichen, aus Metall, insbesondere aus einem rostfreien Stahl, und/oder, zumindest im Wesentlichen, aus Kunststoff gefertigt sein. Das Gehäuse kann eine, zumindest im Wesentlichen, quaderförmige Form aufweisen. Unter einer zumindest im Wesentlichen quaderförmigen Form ist insbesondere zu verstehen, dass Eckbereiche des Gehäuses abgerundet sein können. Derartige Abrundungen dienen insbesondere der Verbesserung des ästhetischen Erscheinungsbildes der Vorrichtung.

Das Gehäuse kann zwei Längsseiten aufweisen, die vorzugsweise parallel zur Längsrichtung des in der Vorrichtung aufgenommenen Zweirades orientiert sind. Die Längsseiten des Spritzschutzgehäuses können verschließbare Öffnungen aufweisen. Die verschließbaren Öffnungen sind insbesondere durch Schiebetüren verschlossen. Eine entsprechende verschließbare Öffnung kann auf einer und/oder beiden Längsseiten des Spritzschutzgehäuses vorgesehen sein. Die verschließbaren Öffnungen dienen insbesondere dazu, eine manuelle Reinigung, beispielsweise als Vorreinigung, des Gegenstands, insbesondere des Zweirades zu ermöglichen. Darüber hinaus ermöglichen sie den Zugang ins Innere der Vorrichtung, beispielsweise zu Wartungszwecken.

Das Gehäuse kann zwei, zumindest im Wesentlichen, rechtwinklig zu den Längsseiten angeordnete Querseiten aufweisen. Die Querseiten des Gehäuses können, zumindest im Wesentlichen, vertikal und/oder, zumindest im Wesentlichen, parallel zur Querrichtung des zu reinigenden Gegenstands, insbesondere des Zweirades, orientiert. Eine verschließbare Öffnung zur Aufnahme des Gegenstands, insbesondere des Zweirades, in die Vorrichtung kann im Bereich einer Querseite des Spritzschutzgehäuses angeordnet sein. Die Anordnung dieser Öffnung im Bereich der Querseite hat den Vorteil, dass der Gegenstand, insbesondere das Zweirad, in einer geradlinigen Bewegung parallel zu dessen Längsrichtung in die Vorrichtung eingebracht und in seiner bestimmungsgemäßen Position innerhalb der Vorrichtung positioniert werden kann, in der es anschließend gereinigt wird.

Die Vorrichtung kann im Bereich der Stirnseite eine herunterklappbare Rampe aufweisen. Diese dient dazu, das Zweirad in die Vorrichtung einzubringen. Die Rampe kann ein Führungselement zur seitlichen Führung des Zweirades beim Einbringen in die Vorrichtung aufweisen. Ein solches Führungselement erleichtert es, das Zweirad in einer geradlinigen Bewegung in seine bestimmungsgemäße Position innerhalb der Vorrichtung zu bringen. Die Rampe kann insbesondere als Auffangwanne für Reinigungsflüssigkeit ausgebildet sein. Hierdurch kann verhindert werden, dass Reinigungsflüssigkeit, die noch an dem Zweirad anhaftet, beim entnehmen des Zweirades aus der Vorrichtung zunächst auf die Rampe und anschließend in die Umgebung der Vorrichtung gelangt.

Die Vorrichtung kann eine Innenbeleuchtung aufweisen. Die Innenbeleuchtung kann derart angesteuert sein, dass die Farbe der Innenbeleuchtung in Abhängigkeit von Betriebszuständen der Vorrichtung wechselt. Es kann sich um eine LED-Innenbeleuchtung handeln. Insbesondere in Zusammenhang mit der Innenbeleuchtung können Teile des Spritzschutzgehäuses, insbesondere Elemente zum verschließen verschließbare Öffnungen des in den Gehäuses, wie beispielsweise Schiebetüren an den Längsseiten der Vorrichtung, transparent gestaltet sein.

Die Steuerungseinrichtung der Vorrichtung kann ebenfalls im Bereich einer Längsseite der Vorrichtung angeordnet sein. Hierdurch lässt sich der im Spritzschutzgehäuse zur Verfügung stehende Platz besonders effektiv nutzen.

Die verschließbare Öffnung im Bereich einer Querseite kann bevorzugt randseitig über Spritzschutzelemente, insbesondere in Gestalt von Borsten, verfügen. Es hat sich gezeigt, dass mit derartigen Spritzschutzelementen bereits eine wirksame Abdichtung des Spritzschutzgehäuses gegenüber austretender Reinigungsflüssigkeit erzielt werden kann. Insbesondere kann ein Gegenstand, insbesondere ein Zweirad, während der Reinigung aus der Vorrichtung herausragen und die Spritzschutzelemente durchdringen. Insbesondere Borsten können trotz des die Spritzschutzelemente durchdringenden Gegenstands einen wirksamen Spritzschutz bereitstellen. Die verschließbare Öffnung kann eine Breite von mindestens 470 mm, bevorzugt mindestens 520 mm, aufweisen. Es hat sich gezeigt, dass bei einer Öffnung von dieser Breite die Pedale marktüblicher Fahrräder die Öffnung ungehindert passieren können.

Das Spritzschutzgehäuse kann eine Gesamtabmessung von wenigstens 0,9 m in Längsrichtung aufweisen.

Das Spritzschutzgehäuse kann eine Gesamtabmessung von wenigstens 0,85 m, insbesondere wenigstens 0,9 m und/oder höchstens 1,65 m, insbesondere höchstens 1,2 m, in Querrichtung aufweisen.

Das Spritzschutzgehäuse kann eine Gesamtabmessung von wenigstens 0,9 m, insbesondere wenigstens 1,0 m und/oder höchstens 1,58 m, insbesondere höchstens 1,2 m in Höhenrichtung aufweisen.

Bei diesen Abmessungen bietet die Vorrichtung eine besonders gute Kombination aus kompakter Bauweise und damit leichte Bedien- und/oder Transportierbarkeit. Gleichzeitig können Zweiräder in vielen unterschiedlichen Baugrößen in der Vorrichtung aufgenommen und gereinigt werden.

Das Spritzschutzgehäuse kann Verkleidungselemente aus Kunststoff aufweisen, die an einem Rahmen angebracht sind. Der Rahmen besteht bevorzugt aus einem metallischen Werkstoff. Hierdurch lässt sich ein leichtes und stabiles Spritzschutzgehäuse in kostengünstiger Art und Weise realisieren.

Das Spritzschutzgehäuse kann an seiner Oberseite eine verschließbare Öffnung aufweisen. Die verschließbare Öffnung an der Oberseite erleichtert das Einführen des Zweirades in die Vorrichtung. Insbesondere ist die verschließbare Öffnung an der Oberseite des Spritzschutzgehäuses derart gestaltet, dass der Lenker und/oder der Sattel des Zweirades auch bei geschlossener Öffnung aus dem Spritzschutzgehäuse hervortreten können. Hierzu kann die verschließbare Öffnung eine Mehrzahl Verschlusselemente aufweisen. Die Verschlusselemente verfügen bevorzugt über Dichtelemente, welche jene Bestandteile des Zweirades, die die aus dem Spritzschutzgehäuse hervortretenden Teile des Zweirades mit dem Rest des Zweirades verbinden, derart umschließen können, dass sich ein wirksamer Spritzschutz ergibt. Die Dichtelemente können zum Öffnen und/oder Schlie-ßen der Öffnung gegenüber den Verschlusselementen verschiebbar sein. Bei diesen Dichtelementen kann es sich beispielsweise um Bürsten handeln. Diese können eine Borstenlänge von höchstens 35 Zentimeter, insbesondere höchstens 25 cm, und/oder wenigstens fünf Zentimeter, insbesondere wenigstens 15 Zentimeter, aufweisen. Es hat sich gezeigt, dass Borsten in diesem Längenbereich gut geeignet sind, um einen wirksamen Spritzschutz herbeizuführen. Derartige Borsten sind lang genug, um bei unterschiedlich gestalteten Zweirädern die entsprechenden Teile zu umschlie-ßen. Andererseits sind diese Borsten nicht derart lang, dass sie sich zwingend unter ihrem Eigengewicht unverhältnismäßig verbiegen und dadurch die Spritzschutzabdichtung gefährden.

Die Vorrichtung kann ein Trennelement, insbesondere ein Trennblech, zum Trennen eines Nassbereichs von einem Trockenbereich aufweisen. Die Vorrichtung ist derart gestaltet, dass das Trennelement von oben in ein sich insbesondere in einer Bodenwanne der Vorrichtung sammelndes Flüssigkeitsreservoir hineinragt. Die von den rotierenden Bürsten abgewandte Seite des Trennelements wird somit effizient vor Spritzwasser geschützt. Auf dieser von den Bürsten abgewandten Seite ist insbesondere die Steuerungseinrichtung der Vorrichtung, insbesondere oberhalb der Oberfläche des Flüssigkeitsreservoirs, in die das Trennelement hineinragt, angeordnet.

Auf dieser von den rotierenden Bürsten abgewandten Seite werden insbesondere auch die elektrischen Leitungen, die unterhalb des Flüssigkeitsspiegels verlegt sind, aus der Flüssigkeit hinaus zu der Steuerungseinrichtung geführt.

Die Vorrichtung kann eine Einführvorrichtung zum Bewirken und/oder Unterstützen des Einführens des Gegenstands, insbesondere des Zweirades, in die Vorrichtung aufweisen. Bei dieser kann es sich insbesondere um ein entlang einer Führung bewegbares Förderelement handeln, welches dazu ausgebildet ist, an dem Gegenstand, insbesondere an dem Zweirad, weiter insbesondere an einem während der Reinigung des Zweirades aus der Vorrichtung hervortretenden Teils des Zweirades wie Lenker und/oder Sattel, anzugreifen, um eine Kraft auf das Zweirad auszuüben, die dessen Bewegung in seine bestimmungsgemäße Position in der Vorrichtung unterstützt und/oder bewirkt. Alternativ und/oder ergänzend kann die Einführeinrichtung dazu geeignet und bestimmt sein, den Gegenstand, insbesondere das Zweirad, aus der Vorrichtung heraus zu befördern. Führung und/oder Förderelement können außerhalb des Spritzschutzgehäuses, insbesondere auf dessen Oberseite, angeordnet sein. Eine solche Einführeinrichtung erleichtert die Bedienung der Vorrichtung, insbesondere bei schweren Zweirädern, erheblich. Alternativ und/oder ergänzend kann die Vorrichtung eine Fördervorrichtung aufweisen, die dazu ausgebildet ist, die zu reinigenden Gegenstände durch die Vorrichtung hindurch zu fördern.

Um den Transport der Vorrichtung zu ermöglichen oder zumindest zu vereinfachen, kann diese Rollen bzw. Räder aufweisen. Diese können feststellbar gestaltet sein. Hierdurch kann wahlweise eine leichte Transportierbarkeit oder ein sicherer Stand der Vorrichtung auf ihrer Unterseite ermöglicht werden. Die Vorrichtung kann insbesondere wenigstens sechs Räder bzw. Rollen aufweisen. Hiervon können zwei Rollen in Längserstreckung der Vorrichtung betrachtet im mittleren Bereich der Vorrichtung angeordnet sein. Dies ist hilfreich, wenn die Vorrichtung beispielsweise über Rampen bewegt werden muss, da hierdurch die Bodenfreiheit beim Passieren des Knickes der Rampe erhöht wird. Hierbei können lediglich die im Bereich einer Querseite der Vorrichtung angeordneten Rollen lenkbar ausgeführt sein, bei den übrigen Rädern bzw. Rollen kann es sich um starre, sogenannte Bockrollen, handeln.

Die Vorrichtung kann verstellbare Standfüße aufweisen. Diese können insbesondere dazu dienen, die Vorrichtung am Wegrollen zu hindern und darüber hinaus kann ein Ausgleich von Unebenheiten des Bodens erfolgen. Die aufeinander zuweisenden Borsten können in einem Winkel von beispielsweise 15° zur Querseite der Vorrichtung in Richtung des Inneren der Vorrichtung orientiert sein. Hierdurch kann sichergestellt werden, dass das von den Borsten aufgefangene Wasser in das Innere der Vorrichtung von den Borsten abtropft.

Weitere praktische Ausführungsformen und Vorteile der Erfindung sind nachfolgend im Zusammenhang mit den Zeichnungen beschrieben. Es zeigen:
- Fig. 1: eine schematische Darstellung einer rotierenden Bürste einer Vorrichtung zur Reinigung von Gegenständen nach dem Stand der Technik,
- Fig. 2: eine schematische Darstellung einer beispielhaften rotierenden Bürsten mit einem Abweiserelement,
- Fig. 3: eine schematische Explosionsdarstellung einer beispielhaften Vorrichtung zum Reinigen von Gegenständen, insbesondere von Zweirädern,

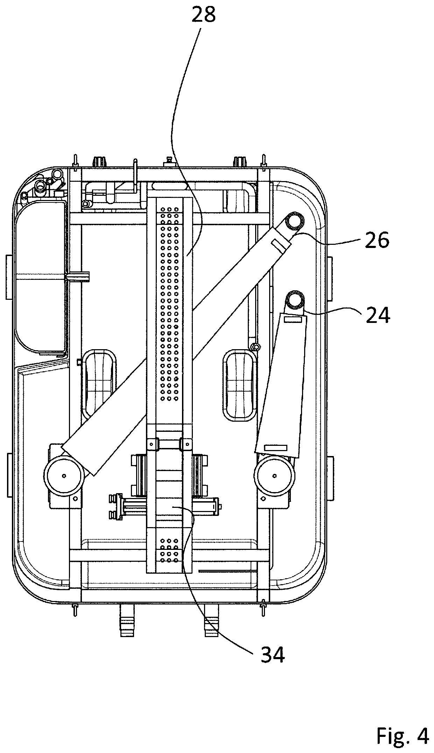

- Fig. 4: eine Darstellung der Bodenwanne der Vorrichtung aus Figur 3,

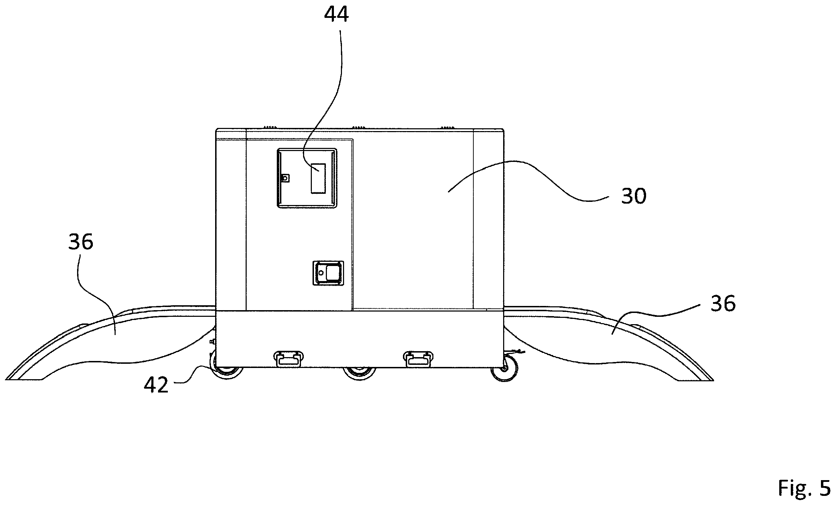

- Fig. 5: eine Ansicht einer Längsseite der Vorrichtung aus Figur 3,

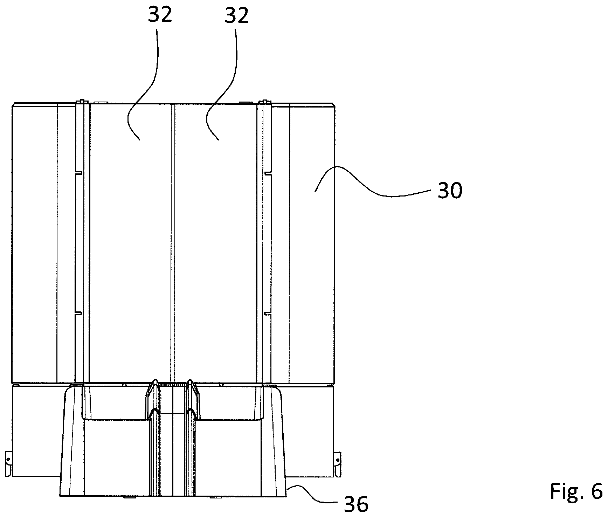

- Fig. 6: eine Ansicht einer Querseite der Vorrichtung aus Figur 6,
- Fig. 7: eine schematische Darstellung eines in der Vorrichtung aus Figur 3 aufgenommenen Gegenstands.

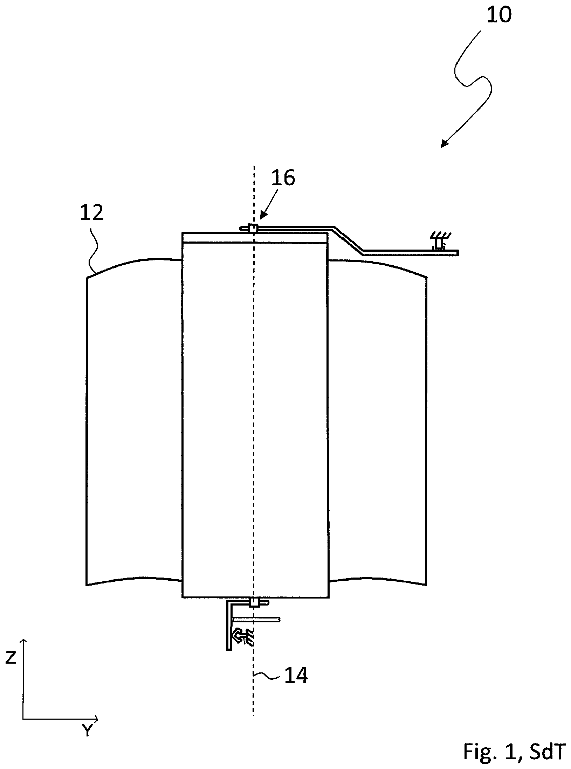

In Figur 1 ist eine typische rotierende Bürste 10 nach dem Stand der Technik dargestellt. Der Bewegungsbereich 12 der Borsten der Bürste 10 resultiert aus der Rotationsbewegung der Bürste 10 um die Rotationsachse 14. Die Rotationsachse 14 ist im gezeigten Beispiel vertikal orientiert. Hierdurch ergibt sich, dass die Borsten trotz der Fliehkräfte von der Rotationsachse 14 weg eine abwärts gerichtete Richtungskomponente besitzen. Der Bewegungsbereich 12 nimmt entsprechend die dargestellte Form an. Von der Rotationsachse 14 weg verschiebt sich der Bewegungsbereich 12 zunehmend nach unten.

Dadurch ergibt sich, dass im Bereich des oberen axialen Endes 16 der Bürste 10 ein nicht durch die Borsten erreichter Bereich entsteht. Es ist erkennbar, dass der Bewegungsbereich 12 im Bereich des Endes der Borsten auf einem wesentlich niedrigeren Höhenniveau liegt als das axiale Ende 16 der Bürste 10.

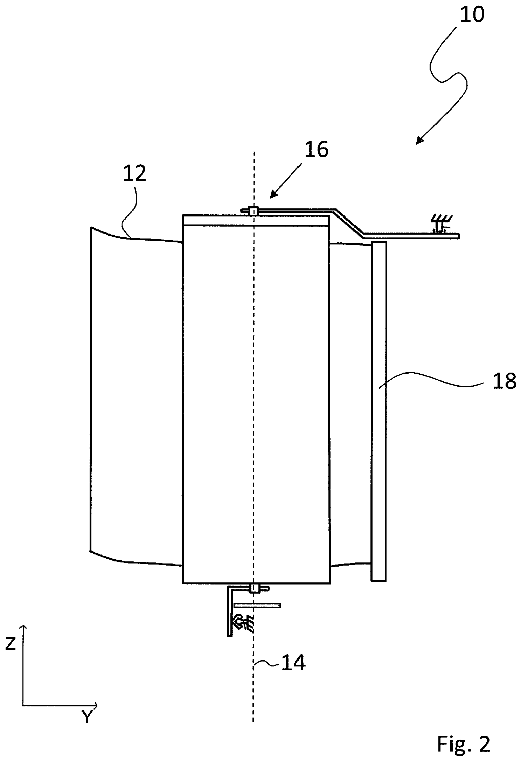

In Figur 2 ist eine Bürste 10 dargestellt, die sich von der in Figur 1 dargestellten Bürste 10 dadurch unterscheidet, dass ein Abweiserelement 18 zumindest teilweise in dem Bewegungsbereich 12 der Borsten angeordnet ist.

Auf der von dem Abweiserelement 18 abgewandten Seite ergibt sich durch den Einfluss des Abweiserelements 18 auf die Bewegung der Borsten eine Aufweitung des Bewegungsbereichs 12 zum axialen Ende 16 der rotierenden Bürste 10 hin. Die Höhendifferenz zwischen dem axialen Ende 16 der Bürste 10 und der durch den Bewegungsbereich 12 erreichbaren Höhe wird so verringert.

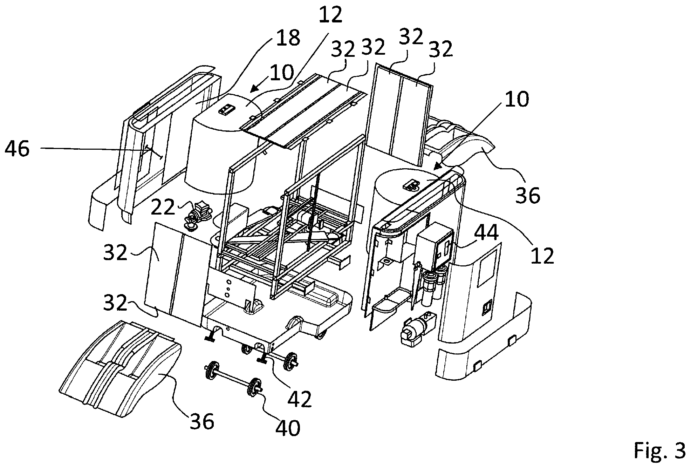

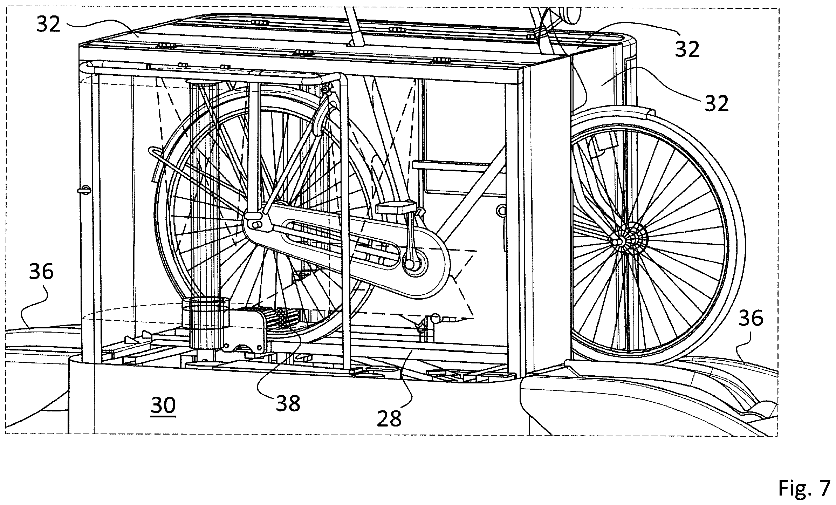

In der Figur 3 ist eine beispielhafte Vorrichtung 20 dargestellt, bei der das vorstehend beschriebene Prinzip zum Einsatz kommt. Die Vorrichtung weist zwei Bürsten 10 auf, zwischen denen der zu reinigende Gegenstand angeordnet werden kann. Die Positionierung eines zu reinigenden Gegenstands in der dargestellten Vorrichtung ist insbesondere aus der Figur 7 ersichtlich.

Die Bewegungsbereiche 12 der Bürsten 10 der dargestellten Vorrichtung sind auf ihrer von dem Aufnahmeraum für den zu reinigenden Gegenstand abgewandten Seite abgeflacht dargestellt. Die Abflachung resultiert aus der Wirkung der Abweiserelemente 18 auf die Borsten der Bürsten 10.

Zur Erzeugung der Rotationsbewegung der Bürsten 10 kann die Vorrichtung wie dargestellt einen Antrieb 22 aufweisen. Dieser ist insbesondere über Übertragungsmittel 24, 26, die wie dargestellt als Riemen ausgestaltet sein können, mit den Bürsten 10 verbunden. Dabei ist das Zugmittel 26 unter dem Aufnahmeraum, insbesondere unter einer Aufnahmeeinrichtung 28 für den zu reinigenden Gegenstand hindurchgeführt. Hierdurch wird es ermöglicht, mit einem Antrieb 22 beide Bürsten 10 in Rotation zu versetzen.

Die Vorrichtung kann wie beispielhaft dargestellt ein Spritzschutzgehäuse 30 aufweisen. Dieses kann über Öffnungen an der Oberseite und/oder an den Querseiten verfügen, die durch Spritzschutzelemente 32 verdeckbar sein können. Die Spritzschutzelemente 32 können insbesondere derart ausgestaltet sein, dass der zu reinigende Gegenstand, bei dem es sich wie in Figur 7 dargestellt um ein Fahrrad handeln kann, durch die geschlossenen Spritzschutzelemente 32 hindurchtreten kann. Dies kann beispielsweise dadurch realisiert sein, dass die Spritzschutzelemente 32 aufeinander zuweisende Borsten aufweisen.

Die Vorrichtung kann wie dargestellt eine Raddreheinheit 34 zum Drehen der Räder eines zwischen den Bürsten 10 aufgenommenen zu reinigenden Zweirades aufweisen. Die Vorrichtung kann im Bereich der Raddreheinheit 34 Bürsten 38 zum Reinigen der Räder, insbesondere der Reifen der Räder des Zweirades aufweisen.

Die Vorrichtung kann weiterhin Rollen 40 und/oder Standfüße 42 aufweisen. Die Rollen 40 dienen dem einfachen Transport der Vorrichtung. Durch die Standfüße 42, die insbesondere höhenverstellbar ausgestaltet sein können, kann ein sicherer Stand der Vorrichtung gewährleistet werden.

Insbesondere kann die Vorrichtung an einer oder - wie dargestellt - an beiden Querseiten Rampen 36 aufweisen. Diese können wie dargestellt als Auffangwannen für Reinigungsflüssigkeit gestaltet sein.

Weiterhin kann die Vorrichtung ein Bezahlsystem 44 und eine rotierende Düse 46 aufweisen.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung ist nicht auf die beschriebenen Ausführungsformen beschränkt. Sie kann im Rahmen der Ansprüche und unter Berücksichtigung der Kenntnisse des zuständigen Fachmanns variiert werden.

### Bezugszeichenliste

- 10: Bürste
- 12: Bewegungsbereich
- 14: Rotationsachse
- 16: Ende
- 18: Abweiserelement
- 20: Vorrichtung
- 22: Antrieb
- 24: Übertragungsmittel
- 26: Übertragungsmittel
- 28: Aufnahmeeinrichtung
- 30: Spritzschutzgehäuse
- 32: Spritzschutzelemente
- 34: Raddreheinheit
- 36: Rampen
- 38: Bürsten
- 40: Rollen
- 42: Standfüße
- 44: Bezahlsystem
- 46: rotierende Düse

- X: Längsrichtung
- Y: Querrichtung
- Z: Höhenrichtung

## Patentansprüche

1. Vorrichtung (20) zum Reinigen von Gegenständen, insbesondere von Zweirädern, mit einer um eine Rotationsachse (14) rotierbaren Bürste (10), wobei die rotierbare Bürste (10) Borsten aufweist, **dadurch gekennzeichnet, dass** die Vorrichtung (20) ein Abweiserelement (18) zum Abweisen der Borsten aufweist, das zumindest teilweise in dem Bewegungsbereich (12) der Borsten bei rotierender Bürste (10) angeordnet ist, so dass die Bewegung der Borsten durch das Abweiserelement (18) beeinflusst wird, wobei die Vorrichtung (20) derart gestaltet und betreibbar ist, dass durch den Einfluss des Abweiserelements (18) auf die Bewegung der Borsten der Bewegungsbereich (12) der Borsten auf der von dem Abweiserelement (18) abgewandten Seite der Bürste (10) in Richtung eines auf die Rotationsachse (14) der Bürste (10) bezogen axialen Endes der Bürste (10) aufgeweitet wird.

2. Vorrichtung (20) nach Anspruch 1, **dadurch gekennzeichnet, dass** die Rotationsachse (14) der Bürste (10), zumindest im Wesentlichen, senkrecht orientiert ist und/oder der Bewegungsbereich (12) zum oberen axialen Ende (16) der Bürste aufgeweitet wird.

3. Vorrichtung (20) nach Anspruch 2, **dadurch gekennzeichnet, dass** das Abweiserelement (18) eine Oberflächenstruktur aufweist, mit der die Bewegung der Borsten beeinflusst wird.

4. Vorrichtung (20) nach Anspruch 3, **dadurch gekennzeichnet, dass** die Vorrichtung (20) zwei Bürsten (10) aufweist, die derart angeordnet sind, dass der zu reinigende Gegenstand in einem Aufnahmeraum zwischen den Bürsten (10) angeordnet werden kann.

5. Vorrichtung (20) nach Anspruch 4, **dadurch gekennzeichnet, dass** beide Bürsten (10) durch einen gemeinsamen Antrieb (22) angetrieben werden, insbesondere wobei ein Übertragungsmittel (24, 26) zur Übertragung der Antriebsbewegung unter einem Aufnahmeraum für den zu reinigenden Gegenstand hindurchgeführt ist.

6. Vorrichtung (20) nach Anspruch 5, **dadurch gekennzeichnet, dass** die Vorrichtung (20) ein Spritzschutzgehäuse (30) aufweist, insbesondere wobei das Gehäuse (30) eine Bodenwanne zum Auffangen von zum Reinigen der Gegenstände verwendeter Reinigungsflüssigkeit aufweist.

7. Vorrichtung (20) nach Anspruch 6, **dadurch gekennzeichnet, dass** die Vorrichtung (20) zum Reinigen von zum Reinigen der Gegenstände verwendeter Reinigungsflüssigkeit eine Hydrozyklonanordnung aufweist, insbesondere wobei die Hydrozyklonanordnung zwei in Reihe geschaltete Hydrozyklone aufweist.

8. Vorrichtung (20) nach Anspruch 7, **dadurch gekennzeichnet, dass** die Vorrichtung (20) eine Rampe (36) zum Einbringen der Gegenstände aufweist, die als Auffangwanne für Reinigungsflüssigkeit ausgebildet ist.

9. Verfahren zum Reinigen von Gegenständen, insbesondere von Zweirädern, insbesondere mit einer Vorrichtung (20) nach einem der vorigen Ansprüche, wobei sich ein zu reinigender Gegenstand, insbesondere ein Zweirad, in den Bewegungsbereich (12) der Borsten einer um eine Rotationsachse (14) rotierenden Bürste (10) befindet, wobei sich ein Abweiserelement (18) zum Abweisen der Borsten zumindest teilweise in dem Bewegungsbereich (12) der Borsten befindet, so dass die Bewegung der Borsten durch das Abweiserelement derart beeinflusst wird, dass durch den Einfluss des Abweiserelements (18) auf die Bewegung der Borsten der Bewegungsbereich (12) der Borsten auf der von dem Abweiserelement (18) abgewandten Seite der Bürste (10) in Richtung eines auf die Rotationsachse (14) der Bürste (10) bezogen axialen Endes (16) der Bürste (10) aufgeweitet wird.

10. Verfahren nach Anspruch 9, **dadurch gekennzeichnet, dass** die Borsten der rotierenden Bürste (10) mit Reinigungsflüssigkeit befeuchtet werden.

## Claims

1. Device (20) for cleaning objects, in particular two-wheeled vehicles, having a brush (10) which can be rotated about an axis of rotation (14), the rotatable brush (10) having bristles, **characterized in that** the device (20) has a deflector element (18) for deflecting the bristles, which deflector element is arranged at least partially in the movement area (12) of the bristles when the brush (10) is rotating, so that the movement of the bristles is influenced by the deflector element (18), the device (20) being designed and operable in such a way that, as a result of the influence of the deflector element (18) on the movement of the bristles, the movement area (12) of the bristles on the side of the brush (10) facing away from the deflector element (18) is expanded in the direction of a, with respect to the axis of rotation (14) of the brush (10), axial end of the brush (10).

2. Device (20) according to claim 1, **characterized in that** the axis of rotation (14) of the brush (10) is, at least substantially, vertically oriented and/or the movement area (12) is expanded towards the upper axial end (16) of the brush.

3. Device (20) according to claim 2, **characterized in that** the deflector element (18) has a surface structure with which the movement of the bristles is influenced.

4. Device (20) according to claim 3, **characterized in that** the device (20) comprises two brushes (10) arranged in such a way that the object to be cleaned can be arranged in a receiving space between the brushes (10).

5. Device (20) according to claim 4, **characterized in that** both brushes (10) are driven by a common drive (22), in particular wherein a transmission means (24, 26) for transmitting the drive movement passes under a receiving space for the object to be cleaned.

6. Device (20) according to claim 5, **characterized in that** the device (20) comprises a splash guard housing (30), in particular wherein the housing (30) comprises a bottom tray for collecting cleaning liquid used for cleaning the objects.

7. Device (20) according to claim 6, **characterized in that** the device (20) comprises a hydrocyclone arrangement for cleaning cleaning liquid used for cleaning the objects, in particular wherein the hydrocyclone arrangement comprises two hydrocyclones connected in series.

8. Device (20) according to claim 7, **characterized in that** the device (20) comprises a ramp (36) for introducing the objects, which ramp is designed as a collecting tray for cleaning liquid.

9. Method for cleaning objects, in particular two-wheeled vehicles, in particular with a device (20) according to one of the preceding claims, wherein an object to be cleaned, in particular a two-wheeled vehicle, is located in the movement area (12) of the bristles of a brush (10) rotating about an axis of rotation (14), wherein a deflector element (18) for deflecting the bristles is located at least partially in the movement area (12) of the bristles, so that the movement of the bristles is influenced by the deflector element in such a way that, as a result of the influence of the deflector element (18) on the movement of the bristles, the movement area (12) of the bristles on the side of the brush (10) facing away from the deflector element (18) is expanded in the direction of a, with respect to the axis of rotation (14) of the brush (10), axial end (16) of the brush (10).

10. Method according to claim 9, **characterized in that** the bristles of the rotating brush (10) are moistened with cleaning liquid.

## Revendications

1. Dispositif (20) pour nettoyer des objets, en particulier des deux-roues, avec une brosse (10) capable de tourner autour d'un axe de rotation (14), la brosse rotative (10) comprenant des poils, **caractérisé en ce que** le dispositif (20) comprend un élément déflecteur (18) pour repousser les poils, disposé au moins partiellement dans la zone de mouvement (12) des poils lorsque la brosse (10) tourne, de sorte que le mouvement des poils est influencé par l'élément déflecteur (18), le dispositif (20) étant conçu et pouvant fonctionner de telle manière que, grâce à l'influence de l'élément déflecteur (18) sur le mouvement des poils, la zone de mouvement (12) des poils sur le côté de la brosse (10) tourné à l'opposé de l'élément déflecteur (18) est élargie dans la direction d'une extrémité axiale de la brosse (10) par rapport à l'axe de rotation (14) de la brosse (10).

2. Dispositif (20) selon la revendication 1, **caractérisé en ce que** l'axe de rotation (14) de la brosse (10) est orienté au moins essentiellement verticalement et/ou la zone de mouvement (12) est élargie vers l'extrémité axiale supérieure (16) de la brosse.

3. Dispositif (20) selon la revendication 2, **caractérisé en ce que** l'élément déflecteur (18) présente une structure de surface par laquelle le mouvement des poils est influencé.

4. Dispositif (20) selon la revendication 3, **caractérisé en ce que** le dispositif (20) comprend deux brosses (10) qui sont agencées de telle manière que l'objet à nettoyer peut être disposé dans un espace de réception entre les brosses (10).

5. Dispositif (20) selon la revendication 4, **caractérisé en ce que** les deux brosses (10) sont entraînées par un entraînement commun (22), notamment dans lequel un moyen de transmission (24, 26) pour transmettre le mouvement d'entraînement est passé sous un espace de réception pour l'objet à nettoyer.

6. Dispositif (20) selon la revendication 5, **caractérisé en ce que** le dispositif (20) comprend un boîtier de protection contre les éclaboussures (30), en particulier le boîtier (30) comprenant un bac de fond pour recueillir le liquide de nettoyage utilisé pour nettoyer les objets.

7. Dispositif (20) selon la revendication 6, **caractérisé en ce que** le dispositif (20) comprend un agencement d'hydrocyclones pour nettoyer le liquide de nettoyage utilisé pour nettoyer les objets, en particulier l'agencement d'hydrocyclones comprenant deux hydrocyclones connectés en série.

8. Dispositif (20) selon la revendication 7, **caractérisé en ce que** le dispositif (20) comprend une rampe (36) pour l'introduction des objets, qui est conçue comme un bac collecteur pour le liquide de nettoyage.

9. Procédé de nettoyage d'objets, notamment de deux-roues, en particulier avec un dispositif (20) selon l'une des revendications précédentes, dans lequel un objet à nettoyer, notamment un deux-roues, se trouve dans la zone de mouvement (12) des poils d'une brosse (10) capable de tourner autour d'un axe de rotation (14), dans lequel un élément déflecteur (18) pour repousser les poils se trouve au moins partiellement dans la zone de mouvement (12) des poils, de sorte que le mouvement des poils est influencé par l'élément déflecteur de telle manière que, grâce à l'influence de l'élément déflecteur (18) sur le mouvement des poils, la zone de mouvement (12) des poils sur le côté de la brosse (10) tourné à l'opposé de l'élément déflecteur (18) est élargie dans la direction d'une extrémité axiale de la brosse (10) par rapport à l'axe de rotation (14) de la brosse (10).

10. Procédé selon la revendication 9, **caractérisé en ce que** les poils de la brosse rotative (10) sont humidifiés avec du liquide de nettoyage.
